# EUROPÄISCHE PATENTSCHRIFT

(11) **EP 1 021 995 B1**
(45) Veröffentlichungstag und Bekanntmachung des Hinweises auf die Patenterteilung: **04.04.2007**
(21) Anmeldenummer: 00100667.5
(22) Anmeldetag: 13.01.2000
(51) Int. Cl.: A61C 3/02

(54) **Dentalinstrument**
Dental tool
Outil dentaire

(30) Priorität: 19.01.1999 DE 19901929
(43) Veröffentlichungstag der Anmeldung: 26.07.2000
(73) Patentinhaber: Gebr. Brasseler GmbH & Co. KG, D-32657 Lemgo (DE)
(72) Erfinder: Danger, Karl-Heinz, 32758 Detmold (DE); Schön, Jürgen, 32689 Kalletal (DE)
(74) Vertreter: Weber, Joachim

(56) Entgegenhaltungen:
- EP-A- 0 120 542
- EP-A- 0 493 701
- DE-A- 3 243 522
- DE-C- 655 891
- GB-A- 379 200
- US-A- 3 832 779

## Beschreibung

Die vorliegende Erfindung betrifft ein verbessertes Dentalwerkzeug mit einem Kopf und einem in einer Antriebsvorrichtung drehbar lagerbaren Schaft.

Im Dentallabor werden heutzutage von Zahntechnikern zur Bearbeitung verschiedenster Werkstoffe insbesondere Fräswerkzeuge verwendet, welche bevorzugt aus Hartmetall hergestellt sind. Mittels dieser Fräswerkzeuge werden die Oberflächen von beispielsweise Kronen, Brücken o.ä. bearbeitet, um sie anschließend mit Hilfe von Feinstschleifwerkzeugen in einem zusätzlichen Arbeitsschritt fertig zu bearbeiten und zu polieren. Hierbei werden vom Zahntechniker unterschiedliche Werkzeuge in Folge eingesetzt, was zu mehrfachen Werkzeugwechselvorgängen führt.

Somit muß ein Zahntechniker während der Bearbeitung zum einen unterschiedliche Werkzeuge bereit halten, und zum anderen wird die Bearbeitungszeit durch die mehrfachen Werkzeugwechselvorgänge verlängert.

Die EP-A 0 120 542 beschreibt ein Dentalinstrument mit einem in einer Antriebsvorrichtung drehbar lagerbaren Schaft, bei welchen der Kopfbereich eine erste Verzahnung umfasst, bei welcher eine zweite Verzahnung und eine dritte Verzahnung überlagert ist.

Es ist somit Aufgabe der vorliegenden Erfindung, ein Dentalwerkzeug zu schaffen, welches bei einfacher Handhabbarkeit und einfacher Herstellbarkeit unterschiedliche Bearbeitungsschritte ausführen kann.

Diese Aufgabe wird durch ein Dentalwerkzeug mit den Merkmalen des Anspruches 1 gelöst. Vorteilhafte Weiterbildungen sind Gegenstand der Unteransprüche.

Ein erfindungsgemäßes Dentalwerkzeug weist somit eine erste, eine zweite und eine dritte Verzahnung auf. Durch diese Dreifach-Verzahnung ist das erfindungsgemäße Dentalwerkzeug, insbesondere ein Dentalfräser, sowohl zum Schruppen als auch zum Schlichten - nachfolgend entsprechend dem zahntechnischen Sprachgebrauch als Finieren bezeichnet - geeignet. Mittels der dreifachen Verzahnung wird somit ein Universalwerkzeug bereitgestellt, welches aufwendige Werkzeugwechselvorgänge verhindert. Dadurch kann die Bearbeitungszeit deutlich reduziert werden. Hierbei können die drei Verzahnungen jeweils für unterschiedliche Arbeitsschritte verwendet werden.

Abhängig vom jeweiligen Werkstoff kann ein Zahntechniker auch durch eine unterschiedliche Wahl der Drehzahl die Schneideigenschaften des Dentalwerkzeug mit der Dreifachverzahnung beeinflussen. Zum Schruppen wird vorzugsweise eine hohe Drehzahl gewählt, wohingegen zum Finieren eine niederere Drehzahl gewählt wird. Die jeweils optimalen Drehzahlen sind jedoch in Abhängigkeit vom Werkstoff zu bestimmen.

Die erste Verzahnung verläuft von einer Spitze des Kopfes zu einem schaftseitigen Ende des Kopfes. Die erste Verzahnung verläuft somit über die gesamte Länge des Kopfes und wird für den Hauptabtrag, d.h. zum Schruppen eingesetzt.

Je nach Art des zu bearbeitenden Materials bzw. der Drehrichtung des Werkzeugs ist die erste Verzahnung, im Linksdrall oder im Rechtsdrall verzahnt. Dabei liegt der Drallwinkel zwischen 4° und 6°. Vorzugsweise kann das Dentalwerkzeug auch zu einer die Mittelachse des Dentalwerkzeugs enthaltenden Ebene symmetrisch aufgebaut sein.

Die zweite Verzahnung ist an den Schneiden der ersten Verzahnung angebracht. Beispielsweise kann die zweite Verzahnung als Kreuzverzahnung ausgestaltet sein, welche Schneiden aufweist, die quer zu den Schneiden der ersten Verzahnung verlaufen. Mittels der zweiten Verzahnung kann in erster Linie eine Feinbearbeitung der Oberfläche erfolgen. Sie wird somit bevorzugt zum Finieren verwendet. Die zweite Verzahnung ist in einem Drallwinkel von ca. 25° bis 35° angebracht.

Um eine Verbesserung der Schneidleistung und der Abtragsleistung zu erreichen, weist die zweite Verzahnung vorteilhaft mehrere Schneiden auf. Bevorzugt ist hierbei eine Vielzahl von Schneiden der zweiten Verzahnung an der ersten Verzahnung vorgesehen. Dadurch kann auch die Abtragsleistung des Dentalwerkzeugs weiter erhöht werden. Auch weist die zweite Verzahnung neben einer aktiven Schneidkante eine glättende Schneidkante auf, welche insbesondere zum Finieren verwendet wird und somit eine Oberfläche mit geringer Rauhtiefe erzeugt.

In einer bevorzugten Ausführungsform ist die dritte Verzahnung als Querhieb ausgebildet. Hierdurch kann insbesondere die Spangröße positiv beeinflußt werden derart, daß die Spangröße der abgetrennten Späne relativ klein ist. Dadurch können die Späne vereinfacht abgeführt werden. Auch verhindert ein Querhieb unerwünschte Vibrationen des Dentalwerkzeugs während der Bearbeitung.

Vorzugsweise ist der an der ersten Verzahnung angebrachte Querhieb der dritten Verzahnung an einer Schneide der ersten Verzahnung unterschiedlich ausgestaltet. Dadurch weisen die Schneiden der ersten Verzahnung unterschiedliche Schneiden der dritten Verzahnung auf.

Vorteilhaft weisen die zweite Verzahnung und die dritte Verzahnung einen zueinander entgegengesetzten Drall auf. Dadurch können sehr kleine Schneidsegmente am Kopf des Dentalwerkzeugs erzeugt werden, wobei eine diamantähnliche Schneidengeometrie entsteht. Dies ermöglicht u.a. einen Einsatz des Dentalwerkzeugs in beiden Drehrichtungen.

In einer bevorzugten Ausführungsform sind jeweils zwischen zwei benachbarten Verzahnungen der zweiten Verzahnung zwei Verzahnungen der dritten Verzahnung angebracht. Dadurch kann insbesondere die Spanerzeugung in Form von kleinen Spänen vorteilhaft beeinflußt werden, als auch unerwünschte Vibrationen während der Bearbeitung der Oberfläche verhindert werden.

Um eine Verzahnung zu erzeugen, die in beide Drehrichtungen des Werkzeugs schneidend wirkt, ist vorteilhaft die dritte Verzahnung gleich der zweiten Verzahnung, wobei beide Verzahnungen einen entgegengesetzten Drall aufweisen. Dadurch ergibt sich eine Diamantverzahnung, welche rautenförmige Schneidsegmente aufweist, wobei sich jeweils eine Vielzahl von Schneiden der beiden Verzahnungen im Eingriff befindet.

Nachfolgend wird die Erfindung anhand von Ausführungsbeispielen in Verbindung mit der Zeichnung beschrieben. In der Zeichnung ist:
- Fig. 1a: eine Seitenansicht einer ersten Verzahnung eines Dentalwerkzeugs gemäß einem ersten Ausführungsbeispiel der vorliegenden Erfindung;
- Fig. 1b: eine vergrößerte Detailansicht der in Fig. 1a dargestellten ersten Verzahnung;
- Fig. 2a: eine Seitenansicht des in Fig. 1a dargestellten Dentalwerkzeugs mit einer ersten und einer zweiten Verzahnung;
- Fig. 2b: eine vergrößerte Detailansicht der in Fig. 2a dargestellten ersten und zweiten Verzahnung;
- Fig. 3a: eine Seitenansicht eines in Fig. 2a dargestellten Dentalwerkzeugs mit einer dritten Verzahnung;
- Fig. 3b: eine vergrößerte Detailansicht der in Fig. 3a dargestellten ersten, zweiten und dritten Verzahnung;
- Fig. 4a: eine Seitenansicht eines erfindungsgemäßen Dentalwerkzeugs gemäß einem zweiten Ausführungsbeispiel der vorliegenden Erfindung mit einer ersten Verzahnung;
- Fig. 4b: eine vergrößerte Detailansicht der in Fig. 4a dargestellten ersten Verzahnung;
- Fig. 5a: eine Seitenansicht des in Fig. 4a dargestellten Dentalwerkzeugs mit einer zweiten Verzahnung;
- Fig. 5b: eine vergrößerte Detailansicht der in Fig. 5a dargestellten ersten und zweiten Verzahnung; und
- Fig. 6: eine Seitenansicht des in Fig. 5a dargestellten Dentalwerkzeugs mit einer dritten Verzahnung.

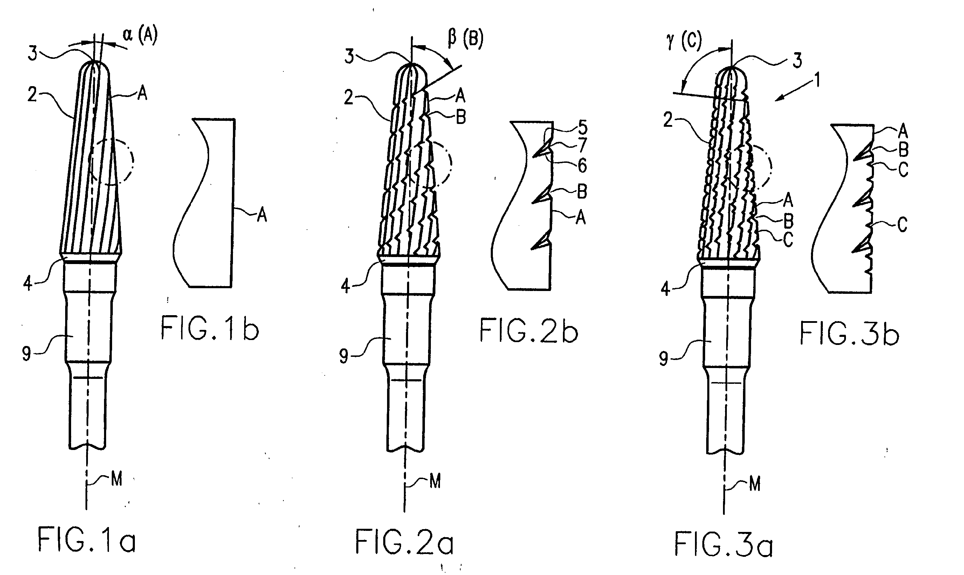

Nachfolgend wird unter Bezugnahme auf die Fig. 1a bis 3b ein erstes Ausführungsbeispiel eines erfindungsgemäßen Dentalwerkzeugs beschrieben.

Ein Dentalwerkzeug 1 weist einen mit Schneiden versehenen Kopf 2 und einen Schaft 9 auf, welcher in einer üblichen Werkzeugaufnahme drehbar gelagert und angetrieben werden kann.

Wie in Fig. 1a dargestellt, ist am Kopf 2 eine erste Verzahnung A vorgesehen. Diese erste Verzahnung A ist als eine Grundverzahnung ausgeführt, welche von einer Spitze 3 des Kopfes 2 zum schaftseitigen Ende 4 des Kopfes verläuft. Die Schneiden der ersten Verzahnung laufen in der Spitze 3 des Kopfes zusammen. Wie aus Fig. 1a und der vergrößerten Detailansicht 1b ersichtlich ist, weist die Verzahnung A einen Linksdrall mit einem Drallwinkel α auf. Es ist jedoch auch denkbar, daß die erste Verzahnung gerade verzahnt ist oder einen Rechtsdrall aufweist. Diese erste Verzahnung A dient als Grundverzahnung, welche die Hauptzerspanungsarbeit leistet und hauptsächlich zum Schruppen des zu bearbeitenden Werkstoffs verwendet wird.

Im vorliegenden Beispiel beträgt der Drallwinkel α=5°. Er kann jedoch abhängig von dem zu bearbeitenden Werkstoff auch etwas größer oder kleiner gewählt werden.

Wie in den Fig. 2a und 2b gezeigt, ist an der ersten Verzahnung A eine zweite Verzahnung B angebracht. Die zweite Verzahnung B weist einen Linksdrall mit einem Winkel β auf, welcher größer als der Drallwinkel α der ersten Verzahnung A ist. Im vorliegenden Ausführungsbeispiel beträgt der Winkel β=60°, er kann jedoch auch größer oder kleiner gewählt werden.

Wie aus der in vergrößertem Maßstab gezeichneten Darstellung in Fig. 2b ersichtlich ist, weist die Verzahnung B eine Nut 7 sowie zwei Schneidkanten 5, 6 auf. Dabei ist die Schneidkante 5 als aktive Schneidkante ausgebildet, welche zusätzlich zur Hauptschneide der ersten Verzahnung A eine abtragende Wirkung aufweist und somit eine Verbesserung der Schneidleistung bzw. der Abtragleistung bewirkt. Weiterhin weist die zweite Verzahnung B eine glättende Schneidkante 6 auf, welche während der Bearbeitung für ein Glätten der Oberfläche sorgt.

In Fig. 3a ist nun das erfindungsgemäße Dentalwerkzeug mit der vollständigen Dreifachverzahnung dargestellt. Hierbei ist noch eine dritte Verzahnung C vorgesehen, welche ebenfalls an der ersten Verzahnung A angebracht ist. Im oberen Bereich des Kopfes 2 sind jeweils zwischen zwei benachbarten Schneiden der zweiten Verzahnung B jeweils eine doppelte Verzahnung der dritten Verzahnung C angeordnet. Im unteren Bereich des Kopfes 2 ist hingegen zwischen zwei benachbarten Schneiden der Verzahnungen B nur noch eine Verzahnung der dritten Verzahnung C angeordnet (vgl. Fig. 3a).

Zur Verdeutlichung ist in Fig. 3b die Dreifachverzahnung in einem vergrößerten Maßstab dargestellt. Durch die als Querhieb ausgebildete dritte Verzahnung C kann die Schneideigenschaft des Dentalwerkzeugs 1 derart beeinflußt werden, daß während der Bearbeitung keinerlei Vibrationen auftreten sowie die Spangröße relativ klein ist. Weiterhin unterstützt der Querhieb C die glättenden und schruppenden Eigenschaften des Dentalwerkzeugs 1. Somit ermöglicht das erfindungsgemäße Dentalwerkzeug mit der Dreifachverzahnung eine abschließende Bearbeitung des Werkstoffs ohne Werkzeugwechsel.

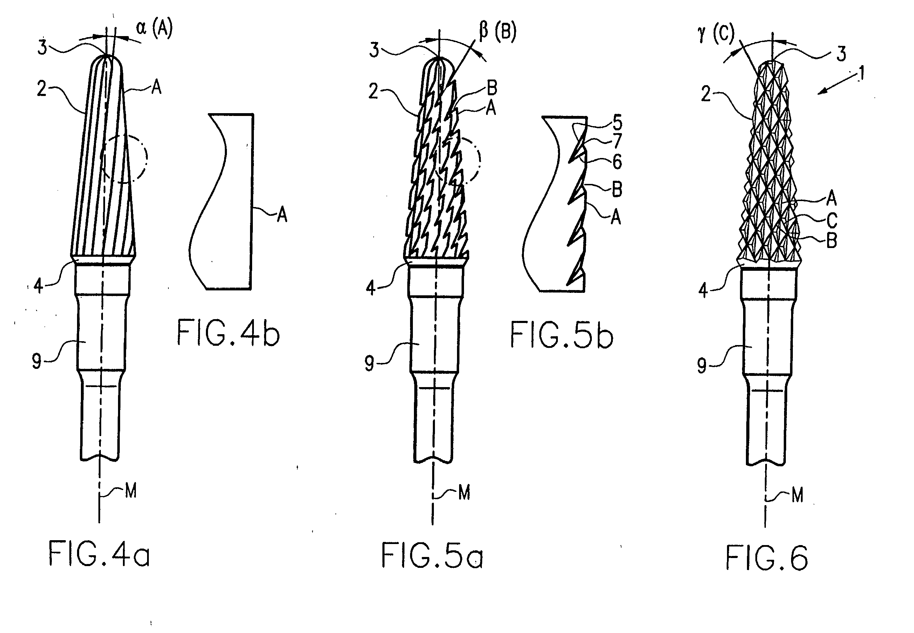

In den Fig. 4a bis 6 ist ein zweites Ausführungsbeispiel der vorliegenden Erfindung dargestellt. Gleiche bzw. ähnliche Teile wurden mit gleichen Bezugszeichen wie im ersten Ausführungsbeispiel bezeichnet.

Wie in Fig. 4a gezeigt, weist das Dentalwerkzeug 1 des zweiten Ausführungsbeispiels am Kopf 2 eine erste Verzahnung A auf, welche von einer Spitze 3 zu einem schaftseitigen Ende 4 des Kopfes verläuft. In der Spitze 3 des Kopfes laufen die einzelnen Schneiden der ersten Verzahnung A zusammen. Die Verzahnung A weist einen Linksdrall mit einem Winkel α von 5° auf, welcher jedoch auch größer oder kleiner gewählt werden kann. Am Kopf 2 ist ein Schaft 9 vorgesehen, welcher in eine Werkzeugaufnahme einer Antriebsvorrichtung gesteckt werden kann. Die erste Verzahnung A ist in einem vergrößerten Maßstab in Fig. 4b dargestellt.

In Fig. 5a ist das Dentalwerkzeug des zweiten Ausführungsbeispiels mit der zweiten Verzahnung B versehen dargestellt. Wie in der vergrößerten Ansicht von Fig. 5b gezeigt, ist die zweite Verzahnung B an der ersten Verzahnung A angebracht und ebenfalls im Linksdrall verzahnt. Hierbei weist die zweite Verzahnung B einen Drallwinkel β von ca. 30° auf. Der Drallwinkel β kann jedoch auch größer oder kleiner gewählt werden.

Wie in Fig. 5b gezeigt, weist die zweite Verzahnung B zwei Schneiden 5, 6 auf. Zwischen den beiden Schneiden 5, 6 ist eine Nut 7 angeordnet. Die Schneidkante 5 ist eine aktive Schneidkante, welche eine Erhöhung der Schneidleistung bewirkt. Die Schneide 6 ist eine glättende Schneidkante, welche in erster Linie finierend wirkt und für ein Glätten der bearbeiteten Oberfläche sorgt.

Fig. 6 stellt nun das vollständige Dentalwerkzeug 1 des zweiten Ausführungsbeispiels, welches als Universalfräser gestaltet ist, dar.

Wie aus Fig. 6 ersichtlich ist, weist die dritte Verzahnung C einen Rechtsdrall mit einem Drallwinkel γ auf. Ansonsten ist jedoch die dritte Verzahnung C mit der zweiten Verzahnung B identisch, so daß ein Werkzeug mit sehr kleinen Schneidsegmenten entsteht, welches eine diamantähnliche Schneidengeometrie aufweist. Das Werkzeug des zweiten Ausführungsbeispiels ist somit für einen linksdrehenden als auch rechtsdrehenden Einsatz geeignet.

Allgemein ist festzustellen, daß der Zahntechniker die Schneideigenschaften des erfindungsgemäßen Dentalwerkzeugs durch eine von ihm gewählte Drehzahl zusätzlich beeinflussen kann. Hierbei dient insbesondere eine hohe Drehzahl zum Schruppen, wohingegen eine niedrige Drehzahl zum Finieren und Erzeugen einer glatten Oberfläche dient. Die jeweils am besten geeigneten Drehzahlen müssen jedoch abhängig von den jeweiligen Werkstoffen bestimmt werden.

Zusammenfassend betrifft die vorliegende Erfindung somit ein Dentalwerkzeug 1 mit einem Kopf 2 und einem drehbar lagerbaren Schaft 9. Der Kopf 2 weist eine erste Verzahnung A, eine zweite Verzahnung B und eine dritte Verzahnung C auf. Mittels dieser Dreifachverzahnung ist somit eine schruppende als auch finierende Bearbeitung verschiedener Werkstoffe möglich.

## Patentansprüche

1. Dentalwerkzeug mit einem Kopf (2) und einem in einer Antriebsvorrichtung drehbar lagerbaren Schaft (9), wobei der Kopf (2) eine erste Verzahnung (A), eine zweite Verzahnung (B) und eine dritte Verzahnung (C) aufweist, wobei die erste Verzahnung (A) von einer Spitze (3) des Kopfes (2) zum schaftseitigen Ende (4) des Kopfes (2) verläuft, wobei die erste und die zweite Verzahnungen (A, B) einen Drall aufweisen, **dadurch gekennzeichnet, daß** der Drallwinkel (α) der ersten Verzahnung (A) zwischen 4° und 6° liegt und daß die zweite Verzahnung (B) mit einem Drallwinkel von ca. 25° bis 35° versehen ist.

2. Dentalwerkzeug nach Anspruch 1, **dadurch gekennzeichnet, daß** die erste Verzahnung (A) im Linksdrall verzahnt ist.

3. Dentalwerkzeug nach Anspruch 1, **dadurch gekennzeichnet, daß** die erste Verzahnung (A) im Rechtsdrall verzahnt ist.

4. Dentalwerkzeug nach einem der Ansprüche 1 bis 3, **dadurch gekennzeichnet, daß** die zweite Verzahnung (B) an den Schneiden der ersten Verzahnung (A) angebracht ist.

5. Dentalwerkzeug nach einem der Ansprüche 1 bis 4, **dadurch gekennzeichnet, daß** die zweite Verzahnung mehrere Schneiden (5, 6) aufweist.

6. Dentalwerkzeug nach Anspruch 5, **dadurch gekennzeichnet, daß** die zweite Verzahnung (B) eine aktive Schneidkante (5) und eine glättende Schneidkante (6) aufweist.

7. Dentalwerkzeug nach Anspruch 5 oder 6, **dadurch gekennzeichnet, daß** eine Vielzahl von Schneiden (5, 6) der zweiten Verzahnung (B) an der ersten Verzahnung (A) angebracht ist.

8. Dentalwerkzeug nach einem der Ansprüche 1 bis 7, **dadurch gekennzeichnet, daß** die dritte Verzahnung (C) an der ersten Verzahnung (A) angebracht ist und als Querhieb ausgebildet ist.

9. Dentalwerkzeug nach Anspruch 8, **dadurch gekennzeichnet, daß** der Querhieb (C) an einer Schneide der ersten Verzahnung (A) unterschiedlich ausgestaltet ist.

10. Dentalwerkzeug nach einem der Ansprüche 1 bis 9, **dadurch gekennzeichnet, daß** die zweite Verzahnung (B) und die dritte Verzahnung (C) einen zueinander entgegengesetzten Drall aufweisen.

11. Dentalwerkzeug nach einem der Ansprüche 1 bis 10, **dadurch gekennzeichnet, daß** die dritte Verzahnung (C) gleich der zweiten Verzahnung (B) ist, wobei die dritte Verzahnung (C) einen zur zweiten Verzahnung (B) entgegengesetzten Drall aufweist.

## Claims

1. Dental tool having a head (2) and a shaft (9) which can be mounted rotatably in a drive device, wherein the head (2) has first toothing (A), second toothing (B) and third toothing (C), wherein the first toothing (A) runs from a tip (3) of the head (2) to the shaft-side end (4) of the head (2), wherein the first and the second toothing (A, B) have a pitch, **characterised in that** the pitch angle (α) of the first toothing (A) lies between 4° and 6°, and **in that** the second toothing (B) is provided with a pitch angle of about 25° to 35°.

2. Dental tool according to claim 1, **characterised in that** the first toothing (A) is toothed with left-handed pitch.

3. Dental tool according to claim 1, **characterised in that** the first toothing (A) is toothed with right-handed pitch.

4. Dental tool according to one of claims 1 to 3, **characterised in that** the second toothing (B) is attached to the cutting edges of the first toothing (A).

5. Dental tool according to one of claims 1 to 4, **characterised in that** the second toothing has several cutting edges (5, 6).

6. Dental tool according to claim 5, **characterised in that** the second toothing (B) has an active cutting edge (5) and a smoothing cutting edge (6).

7. Dental tool according to claim 5 or 6, **characterised in that** a plurality of cutting edges (5, 6) of the second toothing (B) are attached to the first toothing (A).

8. Dental tool according to one of claims 1 to 7, **characterised in that** the third toothing (C) is attached to the first toothing (A) and is designed as a transverse cut.

9. Dental tool according to claim 8, **characterised in that** the transverse cut (C) is designed to be different on one cutting edge of the first toothing (A).

10. Dental tool according to one of claims 1 to 9, **characterised in that** the second toothing (B) and the third toothing (C) have a pitch set against one another.

11. Dental tool according to one of claims 1 to 10, **characterised in that** the third toothing (C) is identical to the second toothing (B), wherein the third toothing (C) has a pitch set against the second toothing (B).

## Revendications

1. Outil dentaire avec une tête (2) et un arbre (9) pouvant être monté en rotation dans un dispositif d'entraînement, dans lequel la tête (2) présente une première denture (A), une deuxième denture (B) et une troisième denture (C), la première denture (A) s'étendant depuis une pointe (3) de la tête (2) jusqu'à l'extrémité côté arbre (4) de la tête (2), les première et deuxième dentures (A, B) présentant une inclinaison, **caractérisé en ce que** l'angle d'inclinaison (α) de la première denture (A) se situe dans une plage de 4° à 6° et **en ce que** la deuxième denture (B) présente un angle d'inclinaison de 25° à 35° environ.

2. Outil dentaire selon la revendication 1, **caractérisé en ce que** la première denture (A) est dentée selon un pas à gauche.

3. Outil dentaire selon la revendication 1, **caractérisé en ce que** la première denture (A) est dentée selon un pas à droite.

4. Outil dentaire selon l'une des revendications 1 à 3, **caractérisé en ce que** la deuxième denture (B) est disposée sur les taillants de la première denture (A).

5. Outil dentaire selon l'une des revendications 1 à 4, **caractérisé en ce que** la deuxième denture présente plusieurs taillants (5, 6).

6. Outil dentaire selon la revendication 5, **caractérisé en ce que** la deuxième denture (B) présente un bord coupant actif (5) et un bord coupant polissant (6).

7. Outil dentaire selon la revendication 5 ou 6, **caractérisé en ce qu'**une pluralité de taillants (5, 6) de la deuxième denture (B) est disposée sur la première denture (A).

8. Outil dentaire selon l'une des revendications 1 à 7, **caractérisé en ce que** la troisième denture (C) est disposée sur la première denture (A) et réalisée sous la forme d'une taille transversale.

9. Outil dentaire selon la revendication 8, **caractérisé en ce que** la taille transversale (C) est configurée différemment sur un taillant de la première denture (A).

10. Outil dentaire selon l'une des revendications 1 à 9, **caractérisé en ce que** la deuxième denture (B) et la troisième denture (C) présentent des inclinaisons de sens opposés.

11. Outil dentaire selon l'une des revendications 1 à 10, **caractérisé en ce que** la troisième denture (C) est identique à la deuxième denture (B), la troisième denture (C) présentant une inclinaison de sens opposé à celle de la deuxième denture (B).
